# FASCICULE DE BREVET EUROPEEN

(11) **EP 0 607 471 B1**
(45) Date de publication et mention de la délivrance du brevet: **01.04.1998**
(21) Numéro de dépôt: 93100249.7
(22) Date de dépôt: 09.01.1993
(51) Int. Cl.: A23L 1/19, A23P 1/16

(54) **Procédé de préparation d'un produit alimentaire, produit foisonné obtenu et produit composite final**
Verfahren zur Herstellung von Nahrungsmitteln, damit hergestellte Schaumprodukte und zusammengesetzte Endprodukte
Process for making a food product, whipped product obtained and final composite product

(43) Date de publication de la demande: 27.07.1994
(73) Titulaire: SOCIETE DES PRODUITS NESTLE S.A., 1800 Vevey (CH)
(72) Inventeur: Chablaix, René Eugène, CH-1007 Lausanne (CH); Gaugaz, Marlène, CH-1803 Corseaux (CH)
(74) Mandataire: Vuille, Roman

(56) Documents cités:
- EP-A- 0 223 872
- EP-A- 0 256 561
- EP-A- 0 383 032
- FR-A- 2 118 757
- GB-A- 2 057 848

## Description

La présente invention à trait à un procédé de préparation d'un produit alimentaire se présentant sous forme d'une masse foisonnée, le produit alimentaire foisonné obtenu, ainsi qu'un produit composite comprenant ledit produit alimentaire foisonné en tant que garniture.

Il est connu, par exemple par le brevet FR 2473269, de préparer un produit alimentaire protéique sucré se présentant sous forme d'une masse plastique en mousse, que l'on peut étaler ou couper en tranche selon sa consistance, à l'aide d'un procédé comprenant les étapes suivantes:
préparation, à 55-65°C, d'une émulsion huile-dans-eau comprenant une phase aqueuse constituée de lait concentré sucré partiellement écrémé possédant une viscosité particulière, et une phase grasse; pasteurisation de l'émulsion; ensemencement à 45-55°C avec des microcristaux de lactose ajoutés en une quantité de 0,015-1% en poids; puis transformation de l'émulsion ensemencée en mousse par injection d'un gaz inerte; et refroidissement en-dessous de 20°C tout en battant mécaniquement la mousse, de manière à provoquer la cristallisation d'au moins une partie de la matière grasse.

La présente invention a pour but de proposer un produit alimentaire contenant une quantité importante de lait, se présentant sous forme d'une masse foisonnée, possédant une structure ferme et une texture onctueuse, et pouvant conserver ses propriétés lors d'une conservation prolongée à 8-15°C, tout en restant microbiologiquement correct.

Un premier objet de l'invention est donc un procédé de préparation d'un produit alimentaire pouvant se présenter sous forme d'une masse foisonnée, dans lequel on prépare un premier mélange comprenant du lait entier et de la poudre de lait écrémé, puis on l'ensemence avec du lactose, on ajoute à ce premier mélange ensemencé, au moins un sucre, on traite thermiquement le second mélange ainsi obtenu et l'on obtient une phase aqueuse, on mélange ladite phase aqueuse à une phase grasse, à une température telle que la matière grasse contenue dans ladite phase grasse est partiellement liquide, de manière à former une émulsion, puis l'on foisonne l'émulsion résultante.

Un second objet de l'invention est un produit alimentaire se présentant sous forme d'une masse foisonnée, ayant une masse volumique de 500-650 g/l et une valeur de pénétrométrie de 3-20 mm mesurée à 11°C, susceptible d'être obtenu par le procédé décrit ci-dessus.

Encore un autre objet de l'invention est l'utilisation dudit produit alimentaire foisonné en tant que garniture dans un produit composite comprenant par ailleurs un produit du four.

Un autre objet de l'invention est ledit produit composite, constitué d'au moins deux parties de produit du four, séparées par ledit produit alimentaire foisonné.

Un avantage de la présente invention est que le produit alimentaire foisonné ainsi préparé présente une structure mousseuse et très aérée, une texture crémeuse, onctueuse et lisse, ainsi que des notes aromatiques lactiques franches caractéristiques du lait frais, ce qui différencie le produit de l'invention des produits préparés à partir de lait concentré sucré, par exemple, qui présentent une note rappelant la maillardisation et présentant l'inconvénient de fausser et/ou masquer les autres notes développées.
Un autre avantage est de permettre la préparation d'un produit présentant une bonne stabilité physique, organoleptique et microbiologique après conservation à 8-15°C.
Un autre avantage est de permettre la préparation d'un produit équilibré nutritionnellement, riche en lait, pouvant contenir au moins 50% de matières premières d'origine lactique et relativement peu de matière grasse.

Dans la suite de la présente description, les pourcentages et parties sont donnés en poids.

Ainsi, selon le procédé de l'invention, on prépare d'une part une phase aqueuse et d'autre part une phase grasse, que l'on mélange dans des conditions particulières, de manière à obtenir une émulsion que l'on foisonne afin d'obtenir le produit alimentaire foisonné souhaité.

Afin de préparer la phase aqueuse, on prépare tout d'abord un premier mélange comprenant du lait entier et de la poudre de lait écrémé.
Le fait de préparer un mélange à base de ces constituants permet, d'une part l'obtention d'un produit final présentant une note aromatique particulière n'ayant pas été modifiée lors d'un traitement thermique supplémentaire, par exemple une concentration.
D'autre part, ce mélange de départ étant déjà constitué d'une émulsion, le lait, il permet la préparation d'une émulsion huile-dans-eau stable et homogène, qui, elle-même, conduit, après foisonnement, à un produit foisonné dont la mousse est ferme, légère, fine, lisse, sèche et stable, et qui ne se défoisonne pas quand on le coupe par exemple. On peut brasser ce premier mélange afin d'obtenir une masse homogène. De préférence, on prépare un mélange qui puisse être ultérieurement pompé, tout en n'étant pas trop liquide, par exemple présentant un taux de matière sèche de 60-70%, ce taux de matière sèche influant également sur la viscosité et sur la texture ultérieure de la masse foisonnée.
On peut également élever la température du lait entier à 30-50°C avant d'ajouter la poudre de lait écrémé, afin d'améliorer l'homogénéisation.

On ensemence le mélange homogène obtenu avec du lactose microcristallin, de manière à influencer dans ce sens la cristallisation du lactose contenu dans le mélange.

On peut ainsi ajouter 0,03-0,05% de lactose au premier mélange.
L'ensemencement est de préférence effectué à une température de l'ordre de 15-30°C.
On peut éventuellement conserver ce premier mélange, après ensemencement, un certain temps à une température de 8-15°C.

On prépare ensuite un second mélange en ajoutant audit premier mélange ensemencé, au moins un sucre.
Ceci permet, d'une part de diminuer la valeur d'activité de l'eau du produit foisonné final, donc d'assurer une bonne conservation dudit produit, d'autre part d'obtenir, après foisonnement, une mousse ferme, qui va conserver sa fermeté lors du stockage.
On peut, par exemple, ajouter un polysaccharide, du saccharose et/ou du sucre inverti.
On peut également ajouter un agent de structure, par exemple de la maltodextrine ou un isolat de protéines de petit lait, ce qui permet en outre de diminuer la quantité de phase grasse à mélanger à la phase aqueuse.
Pour ce faire, on peut porter la température du premier mélange ensemencé à 30-50°C, puis ajouter le sucre, brasser une première fois, ajouter éventuellement l'agent de structure, et brasser à nouveau pendant au moins 15 minutes, tout en maintenant la température à 30-50°C.
Il est en outre possible d'ajouter des arômes, des acides aminés, des sels minéraux et/ou des vitamines audit mélange. On obtient ainsi un second mélange, qui peut être lissé, par exemple à l'aide d'un moulin colloïdal.

On traite thermiquement ce second mélange à 70-80°C, pendant 45-80 secondes, par exemple à l'aide d'un échangeur à surface raclée, de manière à le pasteuriser.
On peut alors éventuellement ensemencer une seconde fois le second mélange traité thermiquement, de préférence après avoir abaissé sa température à 15-30°C.

Ce second ensemencement permet de s'assurer que le lactose qui se serait éventuellement dissous lors du traitement thermique, recristallise dans la forme et la dimension souhaitées.
On peut effectuer ce second ensemencement en ajoutant le reste des microcristaux de lactose au second mélange traité, tout en maintenant une température de 15-30°C.
Au total, on peut ajouter, en une ou deux fois, environ 0,03-0,06% de lactose par rapport au produit foisonné final.

On obtient ainsi une phase aqueuse se présentant sous forme d'une masse, pompable, à 60-70% de taux de matière sèche, que l'on peut conserver pendant un certain temps à 8-15°C.

On prépare également une phase grasse.
On peut utiliser des matières grasses d'origine végétale telles que des matières grasses fractionnées non hydrogénées et le beurre de cacao, et/ou des matières grasses d'origine animale telles que l'huile de beurre, de manière à obtenir une phase grasse présentant les propriétés souhaitées, c'est-à-dire se présentant à l'état solide ou semi-solide jusqu'à environ 10°C, et à l'état fondu ou liquide vers environ 35°C.
On choisit donc les composés constituants la phase grasse en fonction des propriétés souhaitées, puis on les mélange.
Pour ce faire, il est possible d'élever la température du mélange des différentes matières grasses, à environ 60-65°C, de manière à obtenir une phase grasse homogène et à en permettre la manipulation ultérieure, par exemple le pompage.

On prépare ensuite une émulsion en mélangeant ladite phase grasse et ladite phase aqueuse.
Pour ce faire, on porte la phase grasse, ou éventuellement le mélange phase aqueuse et phase grasse, à une température telle que la matière grasse soit partiellement liquide, c'est-à-dire encore en partie cristallisée, de manière à obtenir une émulsion correcte.

On peut, par exemple, utiliser un échangeur à surface raclée pour abaisser la température de la phase grasse à environ 26-29°C, la température dépendant de la composition de ladite phase grasse. La phase aqueuse est alors portée à une température proche de celle de la phase grasse, par exemple à une température de quelques degrés, 1 à 4 degrés notamment, plus faible que la température de ladite phase grasse, puis mélangée à ladite phase grasse.
Dans une forme de réalisation particulière de l'invention, on mélange une partie de phase grasse et 2-4 parties de phase aqueuse, de manière à obtenir un produit final présentant, après foisonnement, une structure mousseuse et aérée ainsi qu'une texture crémeuse, onctueuse et lisse, d'aspect sec, fine et stable.

On foisonne alors l'émulsion résultante, par exemple par injection d'un gaz inerte dans la masse.
On peut ainsi injecter de l'azote pendant 5-10 minutes, tout en maintenant une température de 20-30°C puis poursuivre le foisonnement, avec action mécanique, en abaissant la température jusqu'à 8-15°C, ce qui permet, d'une part de réaliser une cristallisation adéquate de la matière grasse, et d'autre part, de maintenir de bonnes conditions microbiologiques.

On obtient un produit alimentaire se présentant sous forme d'une masse foisonnée, de consistance ferme et stable, dont la mousse est fine et "se tient" bien, c'est-à-dire ne retombe et/ou ne coule pas après conservation et/ou manipulation, et présentant également une texture crémeuse et onctueuse en bouche.
Ce produit peut également être défini à l'aide des caractéristiques suivantes :
. masse volumique : environ 500-650 g/l
. valeur de pénétrométrie à 11°C : 3-20 mm, pour un module hémisphérique de 148,5 g pendant 60 s.

Ce produit présente généralement une teneur en eau de 23-30%, une teneur en matière grasse de 18-35%, et une activité d'eau d'environ 0,9.

On peut conserver ce produit pendant un certain temps, à une température de 8-15°C.

Ledit produit alimentaire peut alors être utilisé dans la préparation d'un produit composite, constitué par ailleurs d'au moins deux parties de produit du four, entre lesquelles est disposé, en tant que garniture, ledit produit alimentaire foisonné.
On peut, par exemple, employer comme produit du four, du biscuit, de la génoise ou un petit pain au lait ou éventuellement brioché.

L'invention est illustrée plus en détail dans les exemples de réalisation suivants.
Dans ces exemples, la mesure de pénétrométrie est effectuée à l'aide d'un pénétromètre SUR, modèle PNR-10, avec un module hémisphérique de 148,5 g, pendant 60 secondes, à 11°C (température du produit).

### Exemple 1

On chauffe 350 g de lait entier à 40°C auquel on ajoute 250 g de poudre de lait écrémé. On brasse de manière à obtenir un mélange homogène présentant un taux de matière sèche de 47%, que l'on refroidit à environ 20°C.
On ensemence le mélange refroidi en ajoutant 0,25 g de microcristaux de β-lactose. On brasse à nouveau, tout en abaissant la température à 10°C.
On maintient le mélange ensemencé au repos à cette température pendant au moins 1 heure.

On prépare ensuite la phase aqueuse de la manière suivante. On porte à 40°C, 600 g du mélange ensemencé.

On ajoute 200 g de sucre inverti présentant un taux de matière sèche de 75% environ, et 50 g de saccharose, on brasse puis l'on ajoute 170 g de maltodextrine et de l'arôme de vanille. On brasse à nouveau de manière à obtenir un mélange homogène et lisse que l'on pasteurise par traitement thermique à 75°C durant 1 minute.
On refroidit le mélange à environ 10°C puis on lui ajoute 0,25 g de microcristaux de β-lactose et l'on obtient ainsi la phase aqueuse que l'on peut conserver à une température inférieure à 10°C.

On prépare la phase grasse de la manière suivante.
On mélange 540 g de matière grasse fractionnée non hydrogénée d'origine végétale, qui contient plus de 90% de solides à 10°C et moins de 2% de solides à 35°C, 320 g d'huile de beurre, 120 g de beurre de cacao et de l'émulsifiant, à une température de l'ordre de 60°C de manière à obtenir un mélange homogène.

On prépare alors l'émulsion de la manière suivante.
On porte à une température de 24°C, 800 g de phase aqueuse présentant un taux de matière sèche de 64%.
On porte à une température de 27°C, 200 g de phase grasse. On mélange les phases aqueuse et grasse, sous atmosphère de gaz inerte (azote) tout en maintenant la température du mélange à 24°C.
On foisonne le mélange ainsi obtenu par injection d'azote, suivie d'une action mécanique, tout en abaissant la température à environ 14°C.
On obtient ainsi une crème aromatisée à la vanille, ferme et homogène, que l'on peut conserver à une température de 8-15°C pendant quelques semaines.

Cette crème à la vanille présente les caractéristiques suivantes:

| | |
|---|---|
| . taux de matière sèche | 71% |
| . pH | 7,0 |
| . valeur d'activité de l'eau (Aw) | 0,9 |
| . taux de matière grasse | 21% |
| dont matière grasse lactique | 7,5% |
| . taux de protéines (toutes d'origine lactique) | 7,6% |
| . ingrédients d'origine lactique | 53% |
| . masse volumique | 560 g/l |
| . pénétrométrie (valeur moyenne) | 12 mm |
| . texture et consistance | ferme, mousseuse, lisse et crémeuse |

La présente crème peut être utilisée comme garniture à raison de 20 g dans un petit pain de 20 à 50 g.
Cette portion de 20 g peut alors être considérée comme contenant l'équivalent d'environ 50 ml de lait entier.

### Exemple 2

On chauffe 310 g de lait entier à 40°C auquel on ajoute 220 g de poudre de lait écrémé. On brasse de manière à obtenir un mélange homogène présentant un taux de matière sèche de 47%, que l'on refroidit à environ 20°C.
On ensemence le mélange refroidi en ajoutant 0,25 g de microcristaux de β-lactose. On brasse à nouveau, tout en abaissant la température à 10°C.
On maintient le mélange ensemencé au repos à cette température pendant au moins 1 heure.

On prépare ensuite la phase aqueuse de la manière suivante.
On porte à 40°C, 530 g du mélange ensemencé précédent.
On ajoute 200 g de sucre inverti présentant un taux de matière sèche de 75% environ, 50 g de saccharose, on brasse puis l'on ajoute 170 g de maltodextrine, de l'arôme de vanille et 55 g de poudre de cacao présentant un taux de matière grasse de 20-22%.
On brasse à nouveau de manière à obtenir un mélange homogène et lisse que l'on pasteurise par traitement thermique à 75°C durant 1 minute.
Après pasteurisation, on refroidit le mélange à environ 10°C, on lui ajoute 0,25 g de microcristaux de β-lactose et l'on obtient ainsi la phase aqueuse que l'on peut conserver à une température inférieure à 10°C.

On prépare la phase grasse de la manière suivante.
On mélange 560 g de matière grasse fractionnée non hydrogénée d'origine végétale, qui contient plus de 90% de solides à 10°C et moins de 2% de solides à 35°C, 330 g d'huile de beurre, 80 g de beurre de cacao et de l'émulsifiant, à une température d'environ 60°C de manière à obtenir un mélange homogène.

On prépare alors l'émulsion de la manière suivante.
On porte à une température de 24°C, 700 g de phase aqueuse présentant un taux de matière sèche de 67%.
On porte à une température de 27°C, 300 g de phase grasse.
On mélange les phases aqueuse et grasse, sous atmosphère de gaz inerte (azote) tout en maintenant la température du mélange à 24°C.
On foisonne le mélange ainsi obtenu par injection d'azote, suivie d'une action mécanique, tout en abaissant la température du mélange foisonné à 14°C.
On obtient ainsi une crème au chocolat ferme et homogène que l'on peut conserver à une température de 8-15°C pendant un certain temps.

Cette crème au chocolat présente les caractéristiques suivantes:

| | |
|---|---|
| . taux de matière sèche | 77% |
| . pH | 7,0 |
| . valeur d'activité de l'eau (Aw) | 0,9 |
| . taux de matière grasse | 32% |
| dont matière grasse lactique | 11% |
| . taux de protéines | 6,6% |
| dont protéines d'origine lactique | 5,9% |
| . ingrédients d'origine lactique | 47% |
| . masse volumique | 640 g/l |
| . pénétrométrie | 8-10 mm |
| . texture et consistance | ferme, mousseuse, lisse et crémeuse |

La présente crème peut être utilisée comme garniture à raison de 20 g dans un petit pain de 20-50 g.
Cette portion de 20 g peut alors être considérée comme contenant l'équivalent d'environ 38 ml de lait entier.

### Exemple 3

On effectue un test de conservation de deux produits composites contenant, l'un, 20 g de crème à la vanille selon l'exemple 1 disposée entre deux parties d'un petit pain de 20 g (produit A) et, l'autre, 20 g de crème au chocolat contenant 20% environ de matière grasse, disposée entre deux parties d'un petit pain de 20 g (produit B).

La mesure de pénétrométrie est effectuée sur la crème uniquement alors que les autres mesures sont effectuées sur le produit composite.

On obtient, après une conservation de 4 semaines à 12°C, les résultats suivants:

| Caractéristiques | Produit A t=0 | Produit A t=28j | Produit B t=0 | Produit B t=28j |
|---|---|---|---|---|
| pH | 6,8 | 6,7 | 6,7 | 6,7 |
| MS (%) | 74,5 | 74,6 | 76,2 | 75,6 |
| Aw | 0,9 | 0,9 | 0,9 | 0,9 |
| Pénétrométrie | 10 mm | 9 mm | 7 mm | 7 mm |
| MS : teneur en matière sèche Aw : activité d'eau Pénétrométrie : à 11°C, avec module hémisphérique de 148,5 g pendant 60 secondes. | | | | |

Après conservation, la crème contenue dans les produits A et B présente une texture et une consistance toujours ferme, lisse et crémeuse, comparable à celles de la crème à 0 jour.

On constate donc que les produits de l'invention conservent bien leurs propriétés lors d'une conservation de 4 semaines à 12°C.

## Revendications

1. Procédé de préparation d'un produit alimentaire pouvant se présentant sous forme d'une masse foisonnée, dans lequel
- on prépare un premier mélange comprenant du lait entier et de la poudre de lait écrémé, puis on l'ensemence avec du lactose,
- on ajoute à ce premier mélange ensemencé, au moins un sucre, on traite thermiquement le second mélange ainsi obtenu et l'on obtient une phase aqueuse,
- on mélange ladite phase aqueuse à une phase grasse, à une température telle que la matière grasse contenue dans ladite phase grasse est partiellement liquide, de manière à former une émulsion, puis
- l'on foisonne l'émulsion résultante.

2. Produit alimentaire lacté se présentant sous forme d'une masse foisonnée, ayant une masse volumique de 500-650 g/l et une valeur de pénétrométrie de 3-20 mm mesurée à 11°C (la mesure étant effectuée à l'aide d'un pénétromètre SUR, modèle PNR-10 avec un module hémisphèrique de 148,5 g pendant 60 secondes), susceptible d'être obtenu par le procédé selon la revendication 1.

3. Utilisation du produit alimentaire selon la revendication 2, comme garniture dans un produit composite comprenant par ailleurs un produit du four.

4. Produit composite constitué d'au moins deux parties de produit du four, séparées par le produit alimentaire foisonné selon la revendication 2.

## Claims

1. Process for preparing a food product having the form of a whipped mass, wherein :
- a first mixture is prepared comprising whole milk and skimmed milk powder and it is seeded with lactose,
- at least one sugar is added to this first seeded mixture, the second mixture thus obtained is heat treated and an aqueous phase is obtained,
- the said aqueous phase is mixed with a fatty phase, at a temperature such that the fatty material contained in the said fatty phase is partially liquid, so as to form an emulsion, and then
- the resulting emulsion is whipped.

2. Milk-based food product in the form of a whipped mass, having a density of 500-650 g/l and a penetrometer value of 3-20 mm measured at 11°C (the measurement being carried out with the aid of an SUR penetrometer, model PNR-10, with a hemispherical 148.5 g module for 60 seconds) which can be obtained by the process according to claim 1.

3. Use of the food product according to claim 2, as a filling in a composite product which also comprises a baked product.

4. Composite product consisting of at least two parts of a baked product, separated by the whipped food product according to claim 2.

## Patentansprüche

1. Verfahren zur Herstellung eines Lebensmittelprodukts, das in Form einer geschäumten Masse vorliegt, bei dem
- man eine erste Mischung herstellt, die Vollmilch und Magermilchpulver enthält, die man mit Lactose beimpft,
- man der ersten beimpften Mischung wenigstens einen Zucker zusetzt, man die auf diese Weise erhaltene zweite Mischung thermisch behandelt und eine wäßrige Phase erhält,
- man diese wäßrige Phase mit einer Fettphase mischt, und zwar bei einer Temperatur, bei der das Fett in der genannten Fettphase teilweise flüssig ist, so daß man eine Emulsion bildet, und
- man die resultierende Emulsion aufschäumt.

2. Nahrungsmittelprodukt auf Milchbasis in Form einer geschäumten Masse, das eine Volumenmasse von 500-650 g/l und eine Eindringhärte von 3-20 mm, gemessen bei 11°C mit Hilfe eines Meßgeräts zur Bestimmung der Eindringhärte SUR, Modell PNR-10 mit einem Halbkugel-Modul von 148,5 g für 60 s, aufweist und das nach dem Verfahren nach Anspruch 1 erhältlich ist.

3. Verwendung eines Nahrungsmittelprodukts nach Anspruch 2 als Belag eines zusammengestzten Produkts, das ansonsten ein gebackenes Produkt umfaßt.

4. Zusammengesetztes Produkt, das aus wenigstens zwei Teilen eines gebackenen Produkts besteht, die durch das geschäumte Nahrungsmittelprodukt nach Anspruch 2 voneinander getrennt sind.
